# Europäisches Patentamt
## European Patent Office
## Office européen des brevets

(11) Publication number: **0 136 548**
**B1**

(12) **EUROPEAN PATENT SPECIFICATION**

(45) Date of publication of patent specification: **13.01.88**

(51) Int. Cl.⁴: **A 01 D 45/02, A 01 B 69/00**

(21) Application number: **84110326.0**

(22) Date of filing: **30.08.84**

(54) **Row sensing apparatus for a crop harvester.**

(30) Priority: **06.09.83 US 529426**
**06.09.83 US 529427**
**06.09.83 US 529428**

(43) Date of publication of application:
**10.04.85 Bulletin 85/15**

(45) Publication of the grant of the patent:
**13.01.88 Bulletin 88/02**

(84) Designated Contracting States:
**AT BE CH DE FR GB IT LI NL**

(56) References cited:
**DD-A- 82 588**
**DD-A- 113 684**
**DD-A- 138 133**
**DE-A-3 013 338**

(73) Proprietor: **DEERE & COMPANY**
**1 John Deere Road**
**Moline Illinois 61265 (US)**

(72) Inventor: **de Buhr, Harold Eugene**
**3 Carter Court Lane**
**Ottumwa Iowa 52501 (US)**
Inventor: **Williams, Terry Arden**
**Rural Route 2 Box 31A**
**Batavia Iowa 52533 (US)**
Inventor: **Dolberg, Dale Ray**
**Rural Route 1 Box 95**
**Hedrick Iowa 52563 (US)**
Inventor: **Suechting, Henry William, Jr.**
**206 Oakwood Avenue**
**Ottumwa Iowa 52501 (US)**

(74) Representative: **Collins, Geoffrey Stainton et al**
**c/o Reddie & Grose 16 Theobalds Road**
**London WC1X 8PL (GB)**

Courier Press, Leamington Spa, England.

## Description

This invention relates to row sensing apparatus, for the guidance of a crop harvester having a pair of neighbouring dividers between which a crop row is received, which apparatus comprises a row sensing unit for each said divider, each unit having a swingable crop-engaging arm, the arms being arranged to be movable by the crop row when the dividers are misaligned with the row, and the arms being connectible to a guidance control circuit to cause the harvester to be steered to re-align with the row in dependence on the movement of the arm.

One type of commercially available pull type forage harvester which is used to harvest a variety of row crops such as corn, sorghum, sugar cane and the like comprises a base unit and an attached header. The base unit/header combination is towed through a field by a tractor which is attached to a tongue of the forage harvester. In the harvesting mode, the harvester is positioned outboard of the tractor by operation of a hydraulic cylinder connected to the tongue of the harvester so that the towing tractor does not have to ride over the crop prior to harvesting. When harvesting, the operator must look rearwardly frequently if he is to maintain the alignment of the harvester with the crop rows being harvested. After initially aligning the tractor and harvester properly relative to the crop rows, alignment is usually maintained by steering the tractor. However, the requirement for the operator to look over his shoulder frequently at the harvester can induce operator fatigue. On the other hand, if the operator does not steer with accuracy harvest losses will be suffered. When not in use, the harvester is also positionable behind the tractor for transport.

To reduce operator fatigue and to simplify the harvesting operation, it has been proposed to provide a guidance system for automatically maintaining the alignment of a pull type harvester with crop rows being harvested by physically sensing the location of the crop row relative to the harvester. One proposal comprising the features of the prior-art portion of claim 1 is disclosed in US—A—4 295 323. A problem in the design of such systems is that the system must provide reliable operation under a variety of crop and field conditions including good standing and down crop conditions, straight and contour rows, clean or weed and grass infested fields and smooth to very stony fields, wet and muddy fields and hilly and level fields. In addition, stalk strengths vary with the type of crop, and crops of the same type have varying stalk strengths due to exposure to different growing conditions including factors such as moisture level, amount of fertilizer used, cultivation practices and thickness of planting.

The present invention enables the guidance system to be protected when crop or field conditions make it inappropriate to operate with the system.

According to the invention each crop-engaging arm of the row sensing apparatus is movable to an inoperative position on the underside of the divider in which it is entirely confined within the periphery of the divider when viewed in plan and in which it is lockable.

Thus when use of the guidance system is not desirable, the crop-engaging arms can safely be stored in the lockout position and removal of the row sensing units is unnecessary.

Embodiments of the invention will now be described with reference to the accompanying diagrammatic drawings in which:

Figure 1 is a fragmentary view of the front portion of a pull-type forage harvester showing particularly a pair of dividers with sensing units of a row crop guidance system;

Figure 2 is a fragmentary, plan view (with parts omitted for clarity) of one of the sensing units shown in Figure 1;

Figure 3 is a cross-sectional view of the sensing unit shown in Figure 2 taken along lines 3—3 of that figure;

Figure 4 is a side, elevational view of the harvester divider and sensing unit of Figure 1 taken along lines 4—4 of that figure;

Figure 5 is a side, elevational view similar to Figure 4 and showing an alternative mounting arrangement for a sensing unit of a row crop guidance system;

Figure 6 is a cross-sectional view of the sensing unit of Figure 5 taken along lines 6—6 of that figure;

Figure 7 is a perspective view of a housing cover for the sensing unit shown in Figure 4; and

Figure 8 is a circuit diagram of the guidance control circuit of the row crop guidance system shown in Figure 1.

Such terms as forward, rearward, vertical, horizontal and lateral are used for convenience and are determined by reference to the machine in its standard operating position and relative to the direction of forward travel. The terms left and right are taken from the standpoint of someone at the rear of the machine facing in the direction of travel.

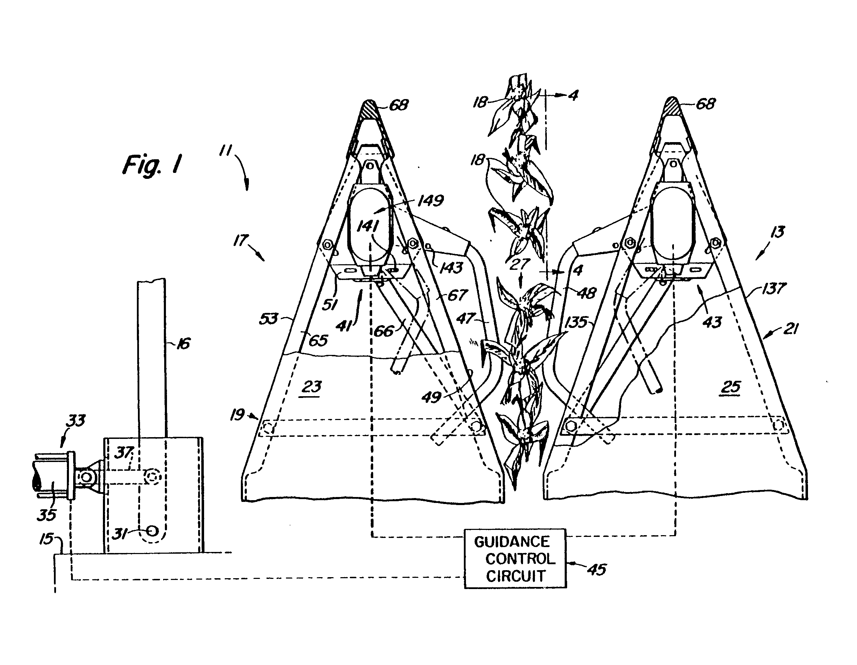

Reference is now made to Figure 1 of the drawings which illustrates in fragmentary and schematic form a towed row crop harvester 11 with a guidance system 13. The harvester 11 is comprised of a base unit 15 and a header 17 and can be used to harvest a variety of row crops such as corn, sorghum, sugar cane and the like. Guidance system 13 automatically senses the location of harvester 11 relative to a crop row 18 and maintains harvester 11 properly aligned with crop row 18 for harvesting. Header 17 is detachably mounted on the base unit 15 via a conventional attaching bracket, for example, such as shown in US—A—3 791 117. The header, except for components of the guidance system, is conventional and may be, for example, a three-row, row crop header as shown in US—A—3 791 117 and manufactured by Deere & Company, Moline, Illinois for its Models 3940 and 3960 forage harvesters. It will be recognized by those skilled in the art that this invention has equal applicability to headers for harvesting two or more rows of crop. By way of further example, the row crop guidance system is equally applicable to headers such as disclosed in US—A—4 259 831 and US—A—4 115 983. Header 17 comprises four transversely spaced, side-by-side, generally fore-and-aft, rearwardly converging, downwardly and forwardly inclined crop dividers. For simplicity, the first and fourth dividers are not shown and only the second divider 19 and the third divider 21 to which the components of the guidance system 13 are attached are shown. (The dividers are numbered by counting left to right in Figure 1). Crop dividers 19, 21 include fenders 23, 25 respectively, (shown partially broken away), which terminate in points. The space between crop dividers 19, 21 forms a generally fore-and-aft crop receiving passageway 27. Similarly, other passageways (not shown) are formed between the first divider (not shown) and second divider 19 and between the third divider 21 and fourth divider.

As is well known, the points of the dividers ride along the ground between rows of standing crop to separate down and entangled crop as the base unit/header combination is towed through the field. The fenders present smooth upper surfaces which allow the crop to slide rearwardly along the top surface of the fenders through an opening (not shown) in a rear attachment frame (not shown) of header 17 and into a throat (not shown) of base unit 15. Crop entering through the throat passes between feed rolls (not shown) in the base unit 15 which feed the crop over a shear bar (not shown) to a cylindrical cutter head (not shown) for cutting the crop into small pieces.

Base unit 15, except for components of the guidance system 13 which are attached thereto, is conventional and can be a model 3940 or 3960 harvester base unit manufactured by Deere & Company, Moline, Illinois. The harvester base unit 15 is towed by a tongue 16 attached to the frame of the base unit at a pivot 31. The angular position of tongue 16 about pivot 31 and the trailing position of harvester 11 behind a towing tractor (not shown) are controllable via a double acting hydraulic cylinder 33. Cylinder 33 includes a housing 35 fixed to the frame of base unit 15 and a piston rod 37 pivotally attached to tongue 16.

Guidance system 13 automatically operates cylinder 33 to maintain the alignment of header passageways 27 with the crop row 18 being harvested. By using guidance system 13 to maintain alignment of passageway 27 with crop row 18, the alignment of the rows of crop immediately adjacent row 18 on the left and right is maintained with the passageways (not shown) formed between the first divider and second divider 19 and between the third divider 21 and the fourth divider (not shown). Guidance system 13 includes a pair of row crop sensing units 41, 43 mounted respectively on dividers 19, 21 and a guidance control circuit 45 connected between units 41, 43 and hydraulic cylinder 33. Units 41, 43 sense the deviation of row 18 from the longitudinal axis of passageway 27 and generate a mechanical signal indicative thereof. Circuit 45 converts the mechanical signal from units 41, 43 into an electrical signal for controlling the operation of cylinder 33 to maintain such deviation within an acceptable range.

The row crop sensing units 41, 43 can be simply attached to the points of dividers 19, 21. Such dividers are commonly commercially available in at least two sizes. One size corresponds to a header designed for harvesting row crops with a 76.2 cm (30 inch) row spacing. Another size corresponds to a header designed for harvesting row crops with a 96.52 cm (38 inch) row spacing. Units 41, 43 are easily retrofitted onto commercially available headers of different sizes.

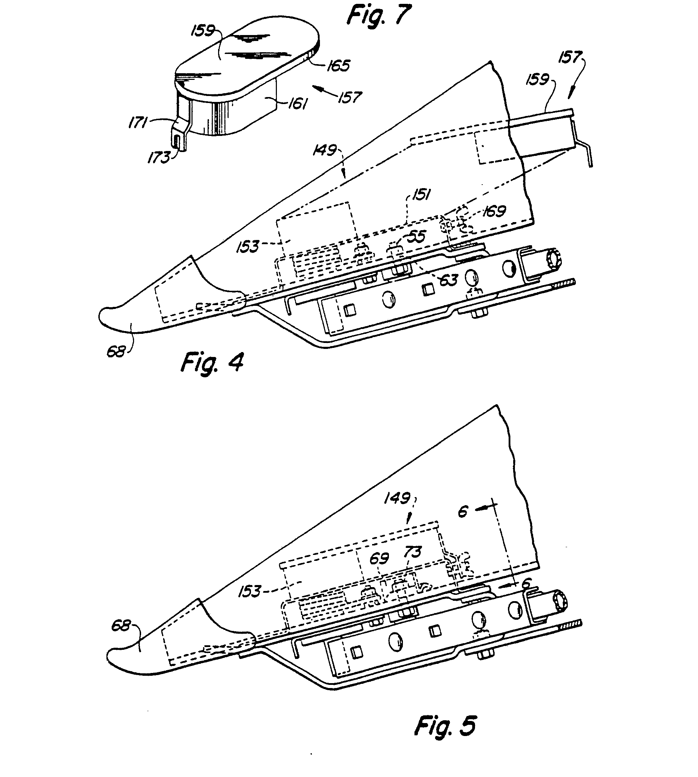

Reference is now made to Figures 1—4 which illustrate in detail a preferred embodiment of the sensing unit 41 which is simply attachable and retrofittable on divider points. Unit 41 comprises (1) a rotatably mounted crop engaging arm 47, (2) means for biasing arm 47 into a crop engaging position wherein arm 47 projects outwardly from a right sidewall 49 into passageway 27 and (3) a sensing unit support frame member or plate 51 in which arm 47 is rotatably mounted. Frame member 51 spans between, and is fixed to, right sidewall 49 and a left sidewall 53. Frame member 51 is fixed to sidewalls 49, 53 via a pair of bolts 55, 57 inserted through respectively slots 59, 61 in plate 51 and holes 63 (Figure 4, only one shown) in left flange 65 and right flange 67. Slots 59, 61 permit frame member 51 to be attached to dividers having a range of spacings between sidewalls 49, 53 as is commonly found for headers designed for different row crop spacings. The means for affixing frame member 51 in divider 19 further includes the formation of frame member 51 with a pair of forwardly converging edges 76, 78 receivable within a divider tip 68 fitted on the forwardly converging end of divider sidewalls 49, 53. Support of unit 41 in divider 19 is further aided by a brace 66 attached to right sidewall 49. Thus, in order to attach unit 41 to divider 19, only minor modifications of divider 19 are necessary. One hole (i.e. hole 63) is drilled in each flange 65, 67. Also, the mounting of the divider points to the header must be enhanced to aid in supporting the additional weight of unit 41.

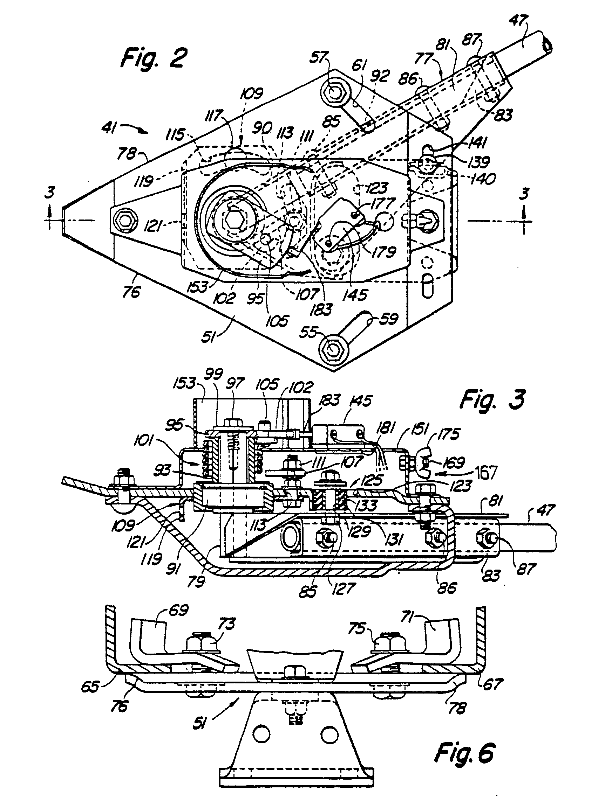

An alternative embodiment of the means for affixing frame member 51 and divider 19 is shown in Figures 5 and 6. Identical components in each of the embodiments are identified by the same number. In accordance with this embodiment, the affixing means includes a pair of clamping plates 69, 71 bolted to frame member 51 via bolts 73, 75 inserted through a pair of slotted openings in plate 51 (not shown, but identical to slots 59, 61 shown in Figure 2). Attachment is accomplished by sandwiching sidewall flange 65 between clamping plate 69 and edge 76 of plate 51 and sandwiching sidewall flange 67 between clamping plate 71 and edge 78 of plate 51. As in the embodiment shown in Figure 2 the converging edges 76, 78 are inserted into the divider tip 68. As will be apparent the embodiment shown in Figures 5, 6, is identical to the embodiment shown in Figures 1 through 4 except that the provision of clamping plate 69, 71 eliminates the necessity of drilling bolt holes 63 (only one shown) in flanges 65, 67, thereby further simplifying the attachment procedure.

Row crop sensing units 41, 43 are essentially identical except that unit 41 is designed for operation on the left side of passageway 27 and unit 43 is designed for operation on the right side of the passageway 27. Thus, the only differences in construction are associated with the location of arms 47, 48. Therefore, a detailed explanation of the structure of unit 43 is deemed to be unwarranted.

Reference is now made primarily to Figures 2 to 4 which illustrate a preferred embodiment of the mounting for crop engaging arm 47 of unit 41.

Arm 47 is adjustably fixed in an arm support 77 including an integral hex shaft 79 rotatably supported in frame member 51. Support 77 includes a pair of mating channels 81, 83 for receiving and rigidly holding one end of arm 47 with a plurality of bolts 85—87. A plurality of additional holes 90, 92 is provided in channel 81 to permit the extension of arm 47 from channels 81, 83 to be adjustable. This permits the length of arm 47 to be adjusted for adaptability of the row crop sensing unit to headers designed for different row crop spacings. Arms 47, 48 are preferably spaced apart about 10 to 14 cm regardless of the header size. Shaft 79 is rotatably supported in plate 51 via (1) a hex shaft bearing 91, (2) a spacer 93 coaxially surrounding shaft 79 and (3) a switch actuator plate 95 fixed to shaft 79 with a bolt 97 and washer 99. Plate 95 operates a switch in guidance control circuit 45 in response to movement of arm 47. Arm 47 is biased into a crop engaging position wherein arm 47 projects outwardly from sidewall 49 into passageway 27 via a torsion spring 101. Spring 101 has one end 102 fixed to a pin 105 on actuator plate 95 and the other end 107 fixed to an adjustable collar 109 via a bolt 111 extending through a slot 113 in plate 51. Bolt 111 is rigid with collar 109 and is adjusted so as to be freely movable in slot 113. The collar 109 is adjustable about the axis of shaft 79 to permit the bias of spring 101 to be adjusted via a slot 115 in collar 109 and a bolt 117 rigidly fixed in plate 51 and extending through slot 115. The bolt end extending through slot 115 is provided with a nut which may be loosened to permit adjustment of collar 109 and tightened to retain collar 109 in the adjusted position. Collar 109 has a flange 119 with an opening 121 for receiving a tool such as a screw driver to rotate collar 109 about the axis of shaft 79 and adjust the tension on spring 101. Opening 121 is accessible to engagement with a tool from the left rear of unit 41. Adjustment of the tension or bias of spring 101 adjusts the force required to move crop engaging arm 47. Variation of the force is desirable because of the differing requirements to harvest in different crop and field conditions and to provide reliable actuation of arm 47 responsive to movement only by a row of crop stalks, but not by other plants such as weeds or grass. The force required to actuate arm 47 should be as high as possible to avoid actuation of the arm by foreign matter such as weeds, yet low enough not to push over the row of crop stalks which is to be sensed. Stalk strength varies with the type of crop and crops of the same type will have varying stalk strengths due to exposure to different growing conditions including factors such as moisture level, amount of fertilizer used, cultivation practices, and thickness of planting.

The rotation of arm 47 is limited by a shock absorbing guide 125 fixed to arm support 77 and movable in a slot 123 in plate 51. Guide 125 includes (1) a shaft or a bolt 127 in channel 81, (2) inner and outer nonresilient liners 129, 131 (preferably metal) and (3) an intermediate resilient liner 133 (preferably rubber). The inner, outer and intermediate liners 129, 131, 133 are mounted coaxially of shaft 127. Slot 123 is sized to permit arm 47 to assume a crop engaging position in passageway 27, to withdraw completely under divider 19 if an obstruction is hit and then to spring back into the operating position. The fact that arm 47 is capable of complete withdrawal under divider 19 helps to prevent or reduce the amount of damage incurred by unit 41 if a major obstruction such as a rock or fence post is hit by arm 47. Guide 125 provides a long lasting shock absorber for movement of arm 47, particularly when arm 47 is required to swing through its full range of travel following impact with an obstacle or even a crop stalk. The sandwiching of rubber between metal provides resiliency and durability.

Arm 47 is shaped to help prevent material from hanging thereon, particularly when it is necessary to reverse when harvesting. First, arm 47 has a continuous portion (Figure 1) extending (a) outwardly of sidewall 49, (b) along passageway 27 and (c) then inwardly of sidewall 49. The trailing portion of the arm 47 curves away from the crop row towards the divider in a manner defining, in plan, an angle greater than 90°. Secondly, the rear end of arm 47 extends inwardly under divider 19 between flange 67 and bar 66 which shield material from the rear end of arm 47.

Crop engaging arms 47, 48 of row crop sensing units 41, 43 respectively are movable between the crop engaging position shown in full lines in Figure 1 and a lockout or inoperative position shown in dotted lines in Figure 1. In the crop engaging position arms 47, 48 project outwardly from right sidewall 49 of divider 19 and from a left sidewall 135 of divider 21 respectively into passageway 27. In the lockout position, arm 47 is entirely under divider 19 between sidewalls 49, 53 and arm 48 is entirely under divider 21 between sidewalls 135, 137. Referring to Figure 2, arm 47 may be retained in the lockout position by a pin 139 inserted through a slot 141 in plate 51 and a hole 143 (Figure 1) in arm support channel 81. Slot 141 and hole 143 are aligned when arm 47 is in the lockout position permitting pin 139 to be inserted therethrough. A retaining clip 140 holds pin 139 in position. An identical pin, hole and slot arrangement is provided in unit 43. Other means for retaining arms 47, 48 in a lockout position will be apparent to those skilled in the art.

The capability to position arms 47, 48 into a lockout position has been found to be desirable when reliable operation of the guidance system is not possible because of crop or field conditions. For example, reliable operation may not be possible (1) when weeds are encountered in a crop being harvested, (2) when harvesting a broadcast planted crop and (3) when harvesting a crop in which there has been a substantial amount of crop regrowth from a prior year. Furthermore, it may be desirable to lock out arms 47, 48 if the guidance control system is malfunctioning, thereby avoiding or reducing the risk of further damage to the system. Thus, when use of the guidance system 13 is not desirable, the arms 47, 48 may be safely stored in the lockout position and removal of units 41, 43 is unnecessary. When the guidance system is locked out, the operator steers or guides the tractor and harvester independently of the guidance system.

Guidance control circuit 45 includes a pair of electrical switches 145, 147 (Figures 2, 3, 8) for detecting the movement of arms 47, 48 respectively. Referring to Figures 2, 3 and 4, in order to shield switch 145 and the upper end of shaft 79 and switch actuator plate 95, a housing or enclosure 149 is provided. A cover 157 (Figure 7) for housing 149 is omitted for clarity in Figures 2 and 3. It is also necessary that housing 149 permit access by the operator to allow adjustment of switches 145, 147. Switches 145, 147 are adjustable so that the amount of movement of arms 47, 48 necessary to actuate switches 145, 147 may be set. Housing 149 includes (1) a floor 151 on which switch 145 is adjustably positioned, (2) a wall 153 fixed to floor 151 and surrounding a portion of floor 151, (3) a cover 157 including a roof 159 and a second wall 161 fixed to roof 159 and surrounding a portion of roof 159 and (4) a fastener 167 for retaining cover 157 in place. Cover 157 fits over wall 153 with the exposed end of walls 153, 161 engaged and with the second wall 161 resting on floor 151, thereby providing a complete enclosure for switch 145 and the upper end of pivot shaft 79 having actuator arm 95 mounted thereon. Roof 159 further includes an exposed flange 165 which extends around the exterior of the upper edge of wall 153 to provide a defined seating relationship of cover 157 on wall 153. Fastener 167 includes a bolt 169 fixed to floor 151 and a strap 171 fixed to cover 157 and having an open ended slot 173 engageable around the bolt 169. Bolt 169 has a wing nut 175 threaded thereon for firmly attaching strap 171 to bolt 169.

Switch 145 is adjustably positioned on floor 151 by way of a pair of screws mounted through switch 145 and extending through slotted openings (not shown) in floor 151. Screws 177, 179 are screwed into a plate 181 beneath floor 151. Switch 145 is adjustably positioned to enable the point at which switch 145 is opened and closed by movement of arm 47 to be set. Figure 2 illustrates switch 145 in the closed position with a switch follower 183 engaged with one end of actuator plate 95. In the open position, follower 183 is engaged with the left side of actuator plate 95, i.e. the arrangement is that of a cam surface and cam follower.

Housing 149 must fit within the available space within fender 23 of divider 19 and be easily removable to permit access to switch 145 for adjustment. As may be seen in Figures 3, 4 and 7, to remove cover 157, firstly wing nut 175 is loosened, secondly cover 157 is moved upwardly to disengage flange 165 from wall 161, and finally cover 157 may be moved rearwardly to expose switch 145. By having wall 161 fixed to floor 151 and by having wall 153 fixed to cover 165, it is possible to provide a durable and rigid enclosure for switch 145 and at the same time provide easy access to and exposure of switch 145 to the operator when adjustment of switch 145 is necessary.

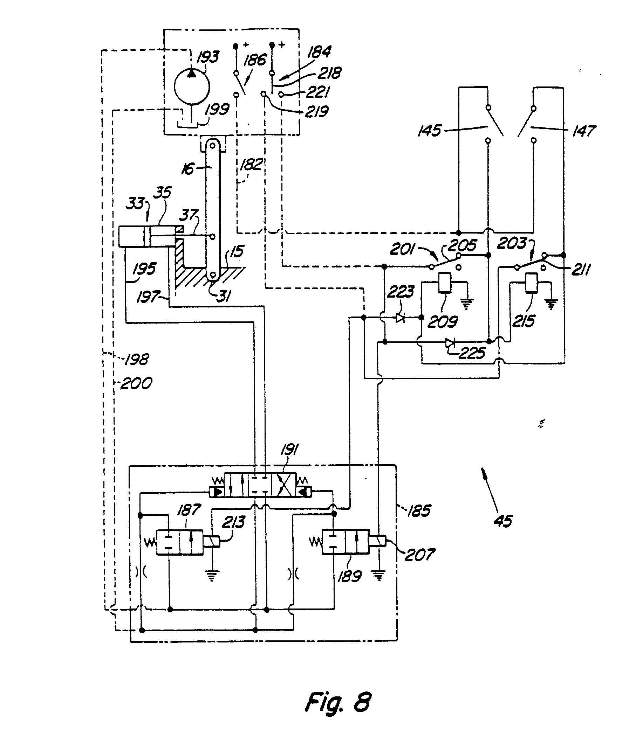

Reference is now made to Figure 8 which shows a circuit diagram of guidance control circuit 45 which controls the operation of hydraulic cylinder 33 connected to harvester tongue 16 responsive to row crop sensing units 41, 43 or to a manual override switch 184. Circuit 45 includes normally open, left and right sensor switches 145, 147 which are mounted, respectively, in sensing units 41, 43. One side of switches 145, 147 is connected to a power source via line 182 and an on-off switch 186. Switches 145, 147 are positioned to be opened and closed responsive to movement of arms 47, 48. Circuit 45 includes a conventional control valve arrangement 185 for operating cylinder 33 responsive to signals from sensor switches 145, 147. Control valve 191 is designed for connection to a closed centre hydraulic system of the tractor used for towing the harvester, although it may be modified (through conventional means not shown) for use with an open centre hydraulic system. Control valve arrangement 185 includes a right, solenoid operated, pilot valve 187 and a left, solenoid operated, pilot valve 189 which are operatively connected to pilot operated, four way, three position control valve 191 for retracting cylinder 33 to shift harvester 11 to the right and for extending cylinder 33 to shift harvester 11 to the left respectively. Valve 191 is in turn connected to double acting cylinder 33 via lines 195, 197. Pilot valves 187, 189 and pilot operated control valve 191 are connected to a hydraulic pump 193 of the tractor used to tow the harvester via line 198. Oil is returned to a reservoir 199 of the towing tractor from cylinder 33 via pilot valves 187, 189 and pilot operated valve 191 through line 200.

To prevent the simultaneous generation of signals from both switches 145, 147, a pair of relays 201, 203 is connected in circuit with switches 145, 147 and control valve 185. Relay 201 includes (1) a normally closed switch 205 connected between one side of switch 145 and a solenoid 207 of pilot valve 189 and (2) a relay coil connected between ground and one side of switch 147. Relay 203 includes a (1) normally closed relay switch 211 connected between one side of switch 147 and a solenoid 213 of pilot valve 187 and (2) a relay coil 215 connected between ground and one side of switch 145. Closure of left sensor switch 145 sends an electrical signal through relay switch 201 to left pilot valve 189 to actuate control valve 191 and in turn hydraulic cylinder 33, and also energizes relay coil 215 opening normally closed relay switch 211. Energization of relay coil 215 opens the circuit path between right sensor switch 147 and pilot valve 187. Similarly, closure of right sensor switch 147 sends a signal through normally closed relay switch 211 to actuate pilot valve 187 to actuate in turn control valve 191 and hydraulic cylinder 33, and energizes relay coil 209 to open normally closed relay switch 205. Energization of relay coil 209 opens the circuit path between left sensor switch 145 and pilot valve 189. As will be apparent, closure of one of the sensor switches 145, 147 prevents the transmission of a signal from the other switch to the corresponding one of pilot valves 187, 189. During any time when both switches 145, 147 are closed, both relay switches 205, 211 are open and no signal is transmittable to control valve 191.

· Guidance control circuit 45 further includes manual override switch 184 which generates a control signal for operation of hydraulic cylinder 33 which has priority over any contradictory signal generated automatically either by switch 145 or switch 147. Manual override switch 184 may be a single pole, double throw switch. The movable contact 218 of switch 184 is connected to a power source. One contact 219 of switch 184 is connected to solenoid 213 of right pilot valve 187 and the other contact 221 of switch 184 is connected to solenoid 207 of left pilot valve 189. Contact 219 of switch 184 is also connected via a diode 223 to relay coil 209 for opening normally closed relay switch 205 connected in circuit with switch 145. Contact 221 of switch 184 is connected via diode 225 to relay coil 215 for opening normally closed relay switch 211 connected in circuit with switch 147.

As may be seen if the operator wishes to move the harvester to the right by closure of switch 184 to contact 219 an automatically generated contradictory signal from switch 145 is prohibited from being transmitted to pilot valve 189 by the opening of normally closed relay switch 205. Similarly, if the operator desires to move the harvester to the left by closure of switch 184 to contact 221 an automatically generated contradictory signal from switch 147 is prohibited from being transmitted to pilot valve 187 by the opening of normally closed relay switch 211.

Thus, through relays 201, 203 operable by automatic sensor switches 145, 147 and by manual override switch 184, the generation of contradictory signals by switches 145, 147 is prohibited, manual switch 184 has priority over sensor switches 145, 147 irrespective of their position, and again contradictory signals from manual switch 184 and one of sensor switches 145, 147 is prohibited. It is clear these functions are accomplished in a reliable, simplified manner.

Guidance system 13 operates by the engagement of a crop stalk 18 with one of the crop engaging arms 47, 48. Assuming arm 47 is engaged by stalk 18, arm 47 is rotated clockwise (Figure 1) to rotate in turn actuator plate 95 clockwise (Figure 2) to close normally open sensor switch 145. Referring to Figure 8, closure of switch 145 generates an electrical signal which is transmitted through normally closed relay switch 205 to solenoid 207 of pilot valve 189. Solenoid 207 is actuated to close the normally open pilot valve 189. Closure of valve 189 shifts pilot operated valve 191 to the left in Figure 8. The shifting of valve 191 to the left connects the closed end of hydraulic cylinder 33 to pump 193 to extend the piston rod 37 from housing 35 which moves tongue 16 clockwise and shifts harvester 11 to the left. Return oil flow from cylinder 33 is transmitted through lines 197, 200 to reservoir 199.

Closure of switch 145 energizes relay coil 215 to open normally closed relay switch 211. The opening of the relay switch 211 prevents a second, contradictory signal from switch 147 from being transmitted to pilot valve 187 simultaneously with the transmission of a signal from switch 145 to pilot valve 189. During the period when both switches 145, 147 are closed, no signal is transmittable to control valve arrangement 185.

Similarly, if switch 145 is in its normally open position and switch 147 is closed by a crop stalk 18 engaging crop engaging arm 48, a signal from switch 147 is transmitted to solenoid 213 of pilot valve 187 via normally closed relay switch 211. Pilot valve 187 is then shifted from its normally open position to a closed condition which in turn shifts pilot operated valve 191 to the right. This connects hydraulic pump 193 to the open or piston rod end of cylinder 33 and retracts piston rod 37 which shifts tongue 16 counter-clockwise and shifts harvester 11 to the right. Return oil flow from cylinder 33 is transmitted through lines 195, 200 to reservoir 199. The closure of switch 147 also energizes coil 209 opening normally closed relay switch 205. This prevents a contradictory signal from switch 145 from being transmitted to pilot valve 189.

The operator through switch 184 always has the capability to manually override automatically generated signals from one or both of switches 145, 147 and thus may position harvester 11 without regard to the condition of switches 145, 147. This control function is important initially to position the harvester in alignment with crop rows to be harvested, to overcome spurious signals generated by weeds or other obstacles and to overcome other conditions such as where the crop may not be in well defined rows in some portions of a field.

It will be appreciated that other variations and modifications of these embodiments are possible. For example, row crop sensing units 41, 43 have been described only in connection with a pull type harvester. Such units are equally applicable to headers used on self-propelled harvesters. In this instance, the sensing units will generate a mechanical signal which will be converted to an electrical signal for use in controlling an automatic steering system for the self-propelled harvester.

The following European Patent Applications contain claims directed to other features of this apparatus:—

8411 0370.8
8411 0325.2
8411 0369.0
8411 0368.2
8411 0324.5
8411 0323.7.

**Claims**

1. Row sensing apparatus, for the guidance of a crop harvester (11) having a pair of neighbouring dividers (19, 21) between which a crop row (18) is received, which apparatus comprises a row sensing unit (41, 43) for each said divider, each unit having a swingable crop-engaging arm (47, 48), the arms being arranged to be movable by the crop row when the dividers are misaligned with the row, and the arms being connectible to a guidance control circuit (45) to cause the harvester to be steered to re-align with the row in dependence on the movement of the arm characterised in that each arm (47, 48) is movable to an inoperative position on the underside of the divider in which it is entirely confined within the periphery of the divider (19, 21) when viewed in plan and in which it is lockable.

2. Row sensing apparatus according to claim 1 characterised in that the row sensing unit (41, 43) includes a switch (145, 147) which is connected to the arm (47, 48) and which is responsive to movement of the arm by the crop row (18) to trigger the guidance control circuit (45) for realigning the harvester (11) and a unit support (51) on which both the arm and switch are mounted and which is attachable to the underside of the associated divider (19, 21).

3. Row sensing apparatus according to claim 2 characterised in that the unit support (51) and the arm (47, 48) have locking apertures (141, 143) therein and the unit (41, 43) includes a locking pin (139) insertable in the apertures to lock the arm in the inoperative position.

4. Row sensing apparatus according to claim 2 or 3 characterised in that the arm (47, 48) is rotatably mounted by way of an upright pivot shaft (79) connected to the unit support (51).

5. Row sensing apparatus according to claim 4 characterised in that the arm (47, 48) comprises an arm carrier portion (77) and a crop-engaging portion, the pivot shaft (79) being attached to the arm carrier portion.

6. Row sensing apparatus according to claim 5 characterised in that the crop-engaging portion is adjustably mounted on the arm carrier portion (77) for variation of the length of the crop-engaging portion extending from the carrier portion.

7. Row sensing apparatus according to claims 3 and 5 or claims 3 and 6 characterised in that a said aperture is in the arm carrier portion (77).

8. Row sensing apparatus according to any of claims 4 to 7 characterised in that a switch actuator (95) is rigidly attached to the pivot shaft (79) and extends therefrom, the pivot shaft being rigid with the arm (47, 48) and the switch actuator having a cam surface thereon, and the switch (145, 147) has a cam follower (183) contacting the cam surface so as to operate the switch to trigger the guidance control circuit (45) on the arm being swung away from its position corresponding to divider alignment.

9. Row sensing apparatus according to claim 8 characterised in that a torsion spring (101) is disposed round the pivot shaft (79), one end of the spring being connected to the switch actuator (95) and the other end to the unit support (51) to bias the arm (47, 48) toward its operative position.

10. Row sensing apparatus according to claim 9 characterised in that the said other end of the spring (101) can be repositioned to adjust the bias.

11. Row sensing apparatus according to claim 10 characterised in that the said other end of the spring (101) is connected to the unit support (51) via a collar (109) received around the pivot shaft (79) and adjustable round the shaft for the said adjustment of the bias, the collar being releasably lockable to the unit support.

12. Row sensing apparatus according to any of claims 8 to 11 characterised in that the row sensing unit (41, 43) has a housing (149) for the switch (145, 147) and switch actuator (95), and the housing has a floor (151), the switch being mounted on the floor and the pivot shaft (79) extending through the floor with the switch actuator (95) above the floor, a first wall (153) rigid with the floor and partially surrounding the pivot shaft and the switch actuator and opening toward the switch (145, 147), a fastener (167), and a removable cover (157) attached by the fastener and extending over the pivot shaft, switch actuator and switch and mating with the top of the first wall and being integral with a second wall (161) extending to the first wall and to the floor completing the enclosure of the switch.

13. Row sensing apparatus according to any of claims 8 to 12 characterised in that the switch actuator (95) comprises a generally rectangular plate with a curved distal end providing the cam surface.

14. Row sensing apparatus according to any of claims 2 to 13 characterised in that the switch (145, 147) is adjustably mounted.

15. Row sensing apparatus according to any of claims 2 to 14 characterised in that the unit support (51) is attachable to sidewalls (49, 53) of the divider (19, 21).

16. Row sensing apparatus according to any of claims 2 to 15 characterised in that the unit support (51) is attachable to the divider (19, 21) by bolts (55, 57).

17. Row sensing apparatus according to claim 16 characterised in that the unit support (51) has slots therein in which the bolts (55, 57) are adjustable to accommodate different sizes of divider (19, 21).

18. Row sensing apparatus according to any of claims 15 to 17 characterised in that the unit support (51) is attachable to the divider (19, 21) at the forwardmost portion thereof.

19. Row sensing apparatus according to any of claims 2 to 18 characterised in that the unit support comprises a plate (51).

20. Row sensing apparatus according to any preceding claim characterised in that the crop-engaging arm (47, 48) has a trailing portion which curves away from the crop row towards the divider in a manner defining, in plan, an angle greater than a right angle and terminates below the divider when the arm is in its operative position.

**Patentansprüche**

1. Reihenabtastvorrichtung zum Führen einer Erntemaschine (11) mit zwei benachbarten Teilern (19, 21), zwischen denen eine Erntegutreihe (18) aufgenommen wird, welche Vorrichtung eine Reihenfühleinheit (41, 43) für jeden genannten Teiler aufweist, jede Einheit einen schwenkbaren, am Erntegut angreifenden Arm (47, 48) besitzt, wobei die Arme so angeordnet sind, daß sie durch die Erntegutreihe bewegt werden, wenn die Teiler nicht auf die Reihe ausgerichtet sind, und die Arme mit einem Führungskontrollkreis (45) verbindbar sind, um zu veranlassen, daß die Erntemaschine in Abhängigkeit von der Bewegung des Armes in Ausrichtung mit der Reihe gelenkt wird, dadurch gekennzeichnet, daß jeder Arm (47, 48) in eine unwirksame Stellung an der Unterseite des Teilers bewegbar ist, in der er bei Draufsicht innerhalb des Umrisses des Teilers (19, 21) vollständig eingeschlossen ist und in der er verriegelbar ist.

2. Reihenabtastvorrichtung nach Anspruch 1, dadurch gekennzeichnet, daß die Reihenfühleinheit (41, 43) einen Schalter (145, 147) aufweist, der mit dem Arm (47, 48) verbunden ist und der auf die Bewegung des Armes durch die Erntegutreihe (18) anspricht, um den Führungskontrollkreis (45) zur Wiederausrichtung der Erntemaschine (11) auszulösen, und welche eine Einheit-Stützeinrichtung (51) aufweist, auf der sowohl der Arm als auch der Schalter montiert sind und die an der Unterseite des zugehörigen Teilers (19, 21) anbringbar ist.

3. Reihenabtastvorrichtung nach Anspruch 2, dadurch gekennzeichnet, daß die Einheit-Stützeinrichtung (51) und der Arm (47, 48) Verriegelungsöffnungen (141, 143) aufweist und die Einheit (41, 43) einen Riegelstift (139) umfaßt, der in die Öffnungen einsetzbar ist, um den Arm in der unwirksamen Stellung zu verriegeln.

4. Reihenabtastvorrichtung nach Anspruch 2 oder 3, dadurch gekennzeichnet, daß der Arm (47, 48) mit Hilfe einer aufrechten Schwenkwelle (79) drehbar montiert ist, die mit der Einheit-Stützeinrichtung (51) verbunden ist.

5. Reihenabtastvorrichtung nach Anspruch 4, dadurch gekennzeichnet, daß der Arm (47, 48) einen Armtragabschnitt (77) und einen am Erntegut angreifenden Abschnitt aufweist und die Schwenkwelle (79) an dem Armtragabschnitt befestigt ist.

6. Reihenabtastvorrichtung nach Anspruch 5, dadurch gekennzeichnet, daß der am Erntegut angreifende Abschnitt auf dem Armtragabschnitt (77) zur Veränderung der Länge des von dem Tragabschnitt aus sich erstreckenden, am Erntegut angreifenden Abschnitt einsellbar montiert ist.

7. Reihenabtastvorrichtung nach Anspruch 3 und 5 oder Anspruch 3 und 6, dadurch gekennzeichnet, daß eine Öffnung in dem Armtragabschnitt (77) vorgesehen ist.

8. Reihenabtastvorrichtung nach irgendeinem der Ansprüche 4 bis 7, dadurch gekennzeichnet, daß ein Schalterbetätigungsglied (95) starr an der Schwenkwelle (79) angebracht ist und sich von dieser aus erstreckt, die Schwenkwelle starr mit dem Arm (47, 48) verbunden ist und das Schalterbetätigungsglied eine Nockenfläche aufweist und der Schalter (145, 147) ein Bewegungsabnahmeglied (183), welches die Nockenfläche berührt, so daß der Schalter zur Auslösung des Führungssteuerkreises (45) betätigt wird, wenn der Arm aus seiner Stellung, die einer Ausrichtung des Teilers entspricht, herausgeschwungen wird.

9. Reihenabtastvorrichtung nach Anspruch 8, dadurch gekennzeichnet, daß eine Torsionsfeder (101) um die Schwenkwelle (79) angeordnet ist, deren eines Ende mit dem Betätigungsglied (95) des Schalters und dessen anderes Ende mit der Einheit-Stützeinrichtung (51) verbunden ist, um den Arm (47, 48) in seine Arbeitsstellung vorzuspannen.

10. Reihenabtastvorrichtung nach Anspruch 9, dadurch gekennzeichnet, daß das genannte andere Ende der Feder (101) zur Einstellung der Vorspannung verstellt werden kann.

11. Reihenabtastvorrichtung nach Anspruch 10, dadurch gekennzeichnet, daß das genannte andere Ende der Feder (101) mit der Einheit-Stützeinrichtung (51) über einen Kragen (109) verbunden ist, der auf der Schwenkwelle (79) aufgenommen ist und um die Welle für die genannte Einstellung der Vorspannung einstellbar ist, wobei der Kragen der Einheit-Stützeinrichtung lösbar verriegelbar ist.

12. Reihenabtastvorrichtung nach irgendeinem der Ansprüche 8 bis 11, dadurch gekennzeichnet, daß die Reihenfühleinheit (41, 43) ein Gehäuse (149) für den Schalter (145, 147) und das Schalterbetätigungsglied (95) aufweist, und das Gehäuse einen Boden (151) umfaßt, wobei der Schalter auf dem Boden montiert ist und die Schwenkwelle (79) durch den Boden ragt und sich das Schalterbetätigungsglied (95) oberhalb des Bodens befindet, wobei eine erste Wand (153) starr mit dem Boden verbunden ist und teilweise die Schwenkwelle und das Schalterbetätigungsglied umgibt und in Richtung des Schalters (145, 147) offen ist, daß ein Befestigungsglied (167) und ein abnehmbarer Deckel (157) vorgesehen sind, der durch die Befestigungseinrichtung anbringbar ist und sich über die Schwenkwelle, das Schalterbetätigungsglied und den Schalter erstreckt und mit dem oberen Ende der ersten Wand zusammenpaßt und einstückig mit einer zweiten Wand (161) ausgebildet ist, die sich auf die erste Wand zu erstreckt und auf den Boden, um die Einschließung für den Schalter zu vervollständigen.

13. Reihenabtastvorrichtung nach irgendeinem der Ansprüche 8 bis 12, dadurch gekennzeichnet, daß das Schalterbetätigungsglied (95) eine allgemein rechteckförmige Platte mit einem gekrümmten abgewendeten Ende aufweist, welches die Nockenfläche darbietet.

14. Reihenabtastvorrichtung nach irgendeinem der Ansprüche 2 bis 13, dadurch gekennzeichnet, daß der Schalter (145, 147) einstellbar montiert ist.

15. Reihenabtastvorrichtung nach irgendeinem der Ansprüche 2 bis 14, dadurch gekennzeichnet, daß die Einheit-Stützeinrichtung an den Seitenwänden (49, 53) des Teilers (19, 21) anbringbar ist.

16. Reihenabtastvorrichtung nach irgendeinem der Ansprüche 2 bis 15, dadurch gekennzeichnet, daß die Einheit-Stützeinrichtung (51) an dem Teiler (19, 21) durch Bolzen (55, 57) anbringbar ist.

17. Reihenabtastvorrichtung nach Anspruch 16, dadurch gekennzeichnet, daß die Einheit-Stützeinrichtung (51) Schlitze aufweist, in denen die Bolzen (55, 57) einstellbar aufnehmbar sind, um eine Anpassung an unterschiedliche Größen des Teilers (19, 21) zu ermöglichen.

18. Reihenabtastvorrichtung nach irgendeinem der Ansprüche 15 bis 17, dadurch gekennzeichnet, daß die Einheit-Stützeinrichtung (51) an dem Teiler (19, 21) an dessen vordersten Bereich anbringbar ist.

19. Reihenabtastvorrichtung nach irgendeinem der Ansprüche 2 bis 18, dadurch gekennzeichnet, daß die Einheit-Stützeinrichtung eine Platte (51) umfaßt.

20. Reihenabtastvorrichtung nach irgendeinem der voranstehenden Ansprüche, dadurch gekennzeichnet, daß der am Erntegut angreifende Arm (47, 48) einen nachlaufenden Abschnitt aufweist, der sich von der Erntegutreihe weg zurück auf den Teiler krümmt, und zwar in einer Weise, die in Draufsicht einen Winkel bestimmt, der größer ist als ein rechter Winkel und unterhalb des Teilers endet, wenn der Arm sich in seiner Arbeitsstellung befindet.

**Revendications**

1. Dispositif tâteur de rang, pour le guidage d'une récolteuse (11) comportant deux séparateurs voisins (19, 21) entre lesquels est reçu un rang de récolte (18), ce dispositif comprenant une unité de détection de récolte (41, 43) pour chaque séparateur, chaque unité comportant un bras oscillant d'attaque de récolte (47, 48), les bras étant agencés de manière à être déplacés par le rang de récolte lorsque les séparateurs ne sont pas correctement alignés avec le rang, et les bras pouvant être reliés à un circuit de commande de guidage (45) pour orienter la récolteuse de manière à la réaligner avec le rang en fonction du mouvement du bras, caractérisé en ce que chaque bras (47, 48) est déplaçable à une position inactive, sous le séparateur, dans laquelle il est entièrement contenu à l'intérieur de la périphérie du séparateur (19, 21) en vue en plan et dans laquelle il est verrouillable.

2. Dispositif tâteur de rang suivant la revendication 1, caractérisé en ce que l'unité de détection de rang (41, 43) comprend un contact (145, 147) qui est relié au bras (47, 48) et qui répond au déplacement du bras par le rang de récolte (18) de manière à déclencher le circuit de commande de guidage (45) pour réaligner la récolteuse (11), et un support d'unité (51) sur lequel sont montés à la fois le bras et le contact et qui peut être fixé à la face inférieure du séparateur associé (19, 21).

3. Dispositif tâteur de rang suivant la revendication 2, caractérisé en ce que le support d'unité (51) et le bras (47, 48) comportent des trous de verrouillage (141, 143) et l'unité (41, 43) comporte une goupille de verrouillage (139) qui peut être insérée dans les trous pour bloquer le bras dans la position inactive.

4. Dispositif tâteur de rang suivant la revendication 2 ou 3, caractérisé en ce que le bras (47, 48) est monté de façon tournante au moyen d'un arbre de pivot vertical (79) connecté au support d'unité (51).

5. Dispositif tâteur de rang suivant la revendication 4, caractérisé en ce que le bras (47, 48) comprend une partie support de bras (77) et une partie d'attaque de récolte, l'arbre de pivot (79) étant fixé à la partie support de bras.

6. Dispositif tâteur de rang suivant la revendication 5, caractérisé en ce que la partie d'attaque de récolte est montée de façon réglable sur la partie support de bras (77), pour une variation de la longueur de la partie d'attaque de récolte s'étendant à partir de la partie support.

7. Dispositif tâteur de rang suivant les revendications 3 et 5 ou les revendications 3 et 6, caractérisé en ce qu'un dit trou est prévu dans la partie support de bras (77).

8. Dispositif tâteur de rang suivant l'une quelconque des revendications 4 à 7, caractérisé en ce qu'un actionneur de contact (95) est fixé rigidement à l'arbre de pivot (79) et s'étend à partir de celui-ci, l'arbre de pivot étant solidaire du bras (47, 48) et l'actionneur de contact présentant une surface de came, et le contact (145, 147) comporte un palpeur de came (183) en contact avec la surface de came de manière à actionner le contact pour déclencher le circuit de commande de guidage (45) lorsque le bras pivote et s'éloigne de sa position correspondant à l'alignement du séparateur.

9. Dispositif tâteur de rang suivant la revendication 8, caractérisé en ce qu'un ressort de torsion (101) est disposé autour de l'arbre de pivot (79), une extrémité du ressort étant connectée à l'actionneur de contact (95) et l'autre extrémité étant connectée au support d'unité (51) de manière à rappeler le bras (47, 48) vers sa position de travail.

10. Dispositif tâteur de rang suivant la revendication 9, caractérisé en ce que ladite autre extrémité du ressort (101) peut être positionnée différemment, pour régler l'action de rappel.

11. Dispositif tâteur de rang suivant la revendication 10, caractérisé en ce que ladite autre extrémité du ressort (101) est connectée au support d'unité (51) au moyen d'un collier (109) reçu autour de l'arbre de pivot (79) et réglable autour de l'arbre pour ledit réglage de l'action de rappel, le collier étant verrouillable de façon libérable au support d'unité.

12. Dispositif tâteur de rang suivant l'une quelconque des revendications 8 à 11, caractérisé en ce que l'unité de détection de rang (41, 43) comprend un boîtier (149) pour le contact (145, 147) et l'actionneur de contact (95), et le boîtier comporte un plancher (151), le contact étant monté sur le plancher et l'arbre de pivot (79) traversant le plancher de sorte que l'actionneur de contact (95) est au-dessus du plancher, une première paroi (153) solidaire du plancher et entourant partiellement l'arbre de pivot et l'actionneur de contact et s'ouvrant vers le contact (145, 147), une fixation (167), et un couvercle amovible (157) attaché par la fixation et s'étendant au-dessus de l'arbre de pivot, de l'actionneur de contact et du contact et coopérant avec le sommet de la première paroi et étant solidaire d'une deuxième paroi (161) qui s'étend jusqu'à la première paroi et jusqu'au plancher pour compléter l'enceinte fermée du contact.

13. Dispositif tâteur de rang suivant l'une quelconque des revendications 8 à 12, caractérisé en ce que l'actionneur de contact (95) comprend une plaque sensiblement rectangulaire à extrémité libre courbe constituant la surface de came.

14. Dispositif tâteur de rang suivant l'une quelconque des revendications 2 à 13, caractérisé en ce que le contact (145, 147) est monté de façon réglable.

15. Dispositif tâteur de rang suivant l'une quelconque des revendications 2 à 14, caractérisé en ce que le support d'unité (51) peut être fixé aux parois latérales (49, 53) du séparateur (19, 21).

16. Dispositif tâteur de rang suivant l'une quelconque des revendications 2 à 15, caractérisé en ce que le support d'unité (51) peut être fixé au séparateur (19, 21) par des boulons (55, 57).

17. Dispositif tâteur de rang suivant la revendication 16, caractérisé en ce que le support d'unité (51) comporte des lumières dans lesquelles les boulons (55, 57) sont réglables pour l'adaptation à différentes dimensions de séparateur (19, 21).

18. Dispositif tâteur de rang suivant l'une quelconque des revendications 15 à 17, caractérisé en ce que le support d'unité (51) peut être fixé au séparateur (19, 21) dans sa partie située le plus vers l'avant.

19. Dispositif tâteur de rang suivant l'une quelconque des revendications 2 à 18, caractérisé en ce que le support d'unité comprend une plaque (51).

20. Dispositif tâteur de rang suivant l'une quelconque des revendications précédentes, caractérisé en ce que le bras d'attaque de récolte (47, 48) comporte une partie arrière qui s'incurve à l'opposé du rang de récolte vers le séparateur, d'une manière définissant, en plan, un angle supérieur à 90°, et qui se termine sous le séparateur lorsque le bras est dans sa position de travail.

Fig. 1

GUIDANCE
CONTROL
CIRCUIT

0 136 548

0 136 548

Fig. 2

Fig. 3

Fig. 6

2

*Fig. 7*

159
165
161
157
171
173

157
159
149
151
153
169
55
163
68

*Fig. 4*

149
6
69 73
153
6
68

*Fig. 5*

Fig. 8